# EUROPEAN PATENT APPLICATION

(11) **EP 3 557 371 A1**
(43) Date of publication of application: **23.10.2019**
(21) Application number: 19169426.4
(22) Date of filing: 16.04.2019
(51) Int. Cl.: G06F 1/16, G06F 3/039, H04M 1/02, H04M 1/23

(54) **TOUCH SCREEN DISPLAY WITH STABILIZING FEATURE**

(30) Priority: 18.04.2018 GB 201806288
(71) Applicant: GE Aviation Systems Limited, Cheltenham Gloucestershire GL52 8SF (GB)
(72) Inventor: SMITH, Mark, Cheltenham, Gloucestershire GL52 8SF (GB)
(74) Representative: Openshaw & Co.

(57) **Abstract**

A touch screen display assembly (23) can include a touch sensitive screen (24) having a screen surface (24a), and at least one slot (47) located adjacent the screen surface (24a) and wherein the at least one slot (47) includes a channel (50) and is configured to form a stabilizing grasping feature when a user (70) interacts with the touch sensitive screen (24).

## Description

### TECHNICAL FIELD

Aspects of this disclosure relate to a touch screen display and methods of operating a vehicle having a touch screen display.

### BACKGROUND

Contemporary aircraft cockpits include a flight deck having multiple flight displays which may display to the flight crew a wide range of aircraft, flight, navigation, and other information used in the operation and control of the aircraft. The multiple flight displays may include touch screens to control various features of the aircraft. During periods of heavy turbulence, vibrations are created in the aircraft as a whole making it difficult to touch the touch screen in the desired manner or location. The ability to control critical systems via a touch screen in vibration environments is crucial to the operation and control of the aircraft.

### BRIEF DESCRIPTION

An aspect of the present disclosure relates to a touch screen display assembly including a touch sensitive screen having a screen surface and at least one slot located adjacent the screen surface and wherein the at least one slot includes a channel that is sized to accommodate at least a distal phalange of at least one finger of a user and wherein the slot is configured to form a stabilizing grasping feature when the user interacts with the touch sensitive screen.

Any permutation of aspects the disclosure can also include wherein the at least one slot is located within a bezel adjacent the touch sensitive screen or located within a housing adjacent the touch sensitive screen. Any permutation of aspects the disclosure can also include wherein the slot is configured to accommodate multiple fingers or the at least one finger up to a proximal phalange. Any permutation of aspects the disclosure can also include wherein the at least one slot includes multiple slots spaced about a periphery of the touch sensitive screen. Any permutation of aspects the disclosure can also include wherein the channel is formed by spaced sidewalls defining an opening width and a rear surface defining a depth. Any permutation of aspects the disclosure can also include wherein the opening width ranges from 25-40 mm and the depth ranges from 30-50 mm. Any permutation of aspects the disclosure can also include wherein the rear surface is parallel to the screen surface. Any permutation of aspects the disclosure can also include wherein the rear surface has a curved profile. Any permutation of aspects the disclosure can also include wherein at least one of the spaced sidewalls is perpendicular to the screen surface. Any permutation of aspects the disclosure can also include wherein the spaced sidewall located closest to the screen surface forms an acute angle with the screen surface. Any permutation of aspects the disclosure can also include wherein the at least one slot is further defined by spaced end walls defining a length of the at least one slot. Any permutation of aspects the disclosure can also include at least one fingertip anchor formed in the spaced sidewall located closest to the screen surface. Any permutation of aspects the disclosure can also include wherein the slot includes an illuminable portion. Any permutation of aspects the disclosure can also include wherein the illuminable portion includes a light disposed within the slot. Any permutation of aspects the disclosure can also include a controller operably coupled to the light and configured to illuminate the light based on at least one of a determined low light condition or a determined turbulent condition. Any permutation of aspects the disclosure can also include wherein the slot includes at least one bump-out configured to receive the light. Any permutation of aspects the disclosure can also include at least one light adjacent the slot and configured to provide an indication of a location of the slot.

Another aspect of the present disclosure relates to a method of operating a vehicle having a touch screen display including detecting movement indicative of turbulence, and when turbulence is detected, illuminating, via a controller, a portion of a slot adjacent the touch screen display and wherein the slot includes a channel that is sized to accommodate at least a distal phalange of at least one finger of a user and wherein the slot is configured to form a stabilizing grasping feature when the user interacts with the touch sensitive screen.

Any permutation of aspects the disclosure can also include determining ambient light conditions. Any permutation of aspects the disclosure can also include wherein the controller controls a level of illumination based on the determined ambient light conditions.

Yet another aspect of the present disclosure relates to a method of operating a vehicle having a touch screen display including detecting, via a controller module, a condition indicative of a light requirement event, and when a light requirement event is detected, illuminating a light source, via the controller module, to emit light onto a portion of a slot adjacent the touch screen display and wherein the slot includes a channel that is sized to accommodate at least a distal phalange of at least one finger of a user and wherein the slot is configured to form a stabilizing grasping feature when the user interacts with the touch screen display.

Any permutation of aspects the disclosure can also include sensing ambient light conditions via a sensor and wherein the sensor is configured to output a signal indicative thereof to the controller module. Any permutation of aspects the disclosure can also include wherein the controller module modifies a level of illumination based on the signal. Any permutation of aspects the disclosure can also include wherein a light requirement event comprises a low light condition. Any permutation of aspects the disclosure can also include wherein the vehicle includes an aircraft having a cockpit with a flight deck

### BRIEF DESCRIPTION OF THE DRAWINGS

In the drawings:
FIG. 1 is a perspective view of a portion of an aircraft cockpit with a flight deck having multiple touch screen displays that may be used according to various aspects described herein.
FIG. 2 is a perspective view of a touch screen display assembly according to various aspects described herein.
FIG. 3 is a schematic view of a user using slots on a touch screen display which may be used in the flight deck of FIG. 1, according to various aspects described herein.
FIG. 4 is schematic side view of slots according to various aspects described herein.
FIG. 5 is schematic side view of slots according to various aspects described herein.
FIG. 6 is schematic side view of slots according to various aspects described herein.
FIG. 7 is schematic side view of slots according to various aspects described herein.

### DETAILED DESCRIPTION

Conventional touch screen displays may utilize a physical stabilization device such as a palm or wrist rest or may have a smaller touch surface. Both options limit the size of the touch screen, which is undesirable in the limited space of an aircraft cockpit. Alternative touch screen displays having larger touch areas are unable to be effectively utilized during periods of heavy turbulence because a user will stabilize their hand on the touch surface of the display. Such stabilization becomes an additional touch on the screen, which may result in an input that the user did not intend.

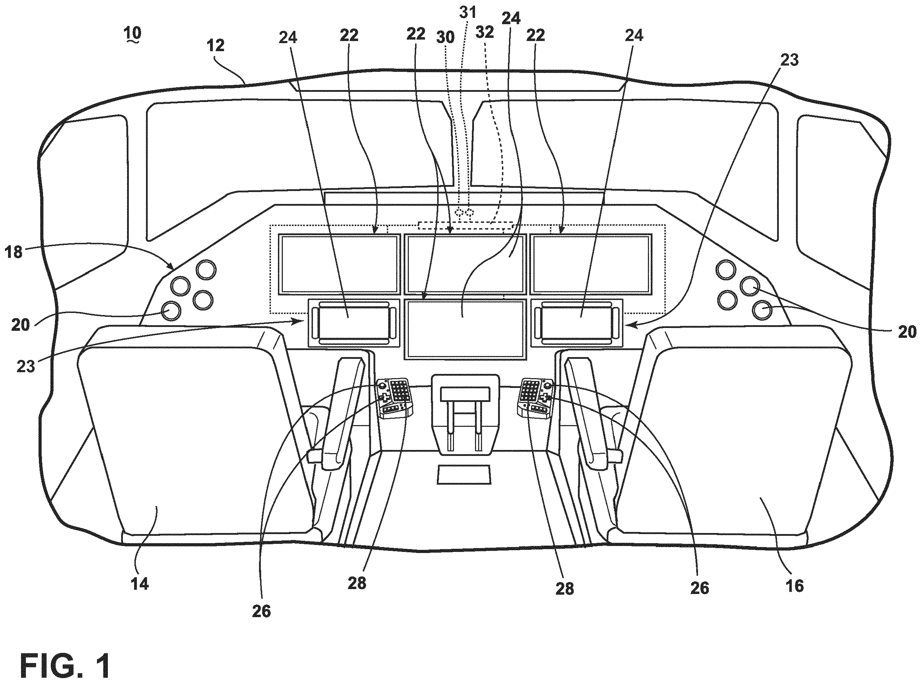

FIG. 1 illustrates a portion of an aircraft 10 having a cockpit 12. While a commercial aircraft has been illustrated, it is contemplated that aspects of the disclosure may be used in any type of vehicle, for example, without limitation, aircrafts such as a fixed-wing, rotating-wing, rocket, personal aircraft, and military aircraft. A first user (e.g. a pilot) may be present in a seat 14 at the left side of the cockpit 12 and another user (e.g. a co-pilot) may be present at the right side of the cockpit 12 in a seat 16. A flight deck 18 having various instruments 20 and multiple multifunction flight displays 22 and 23 may be located in front of the pilot and co-pilot and may provide the flight crew with information to aid in flying the aircraft 10. The flight displays 22 and 23 may include either primary flight displays or multi-function displays and may display a wide range of aircraft, flight, navigation, and other information used in the operation and control of the aircraft 10. The flight displays 22 and 23 have been illustrated as being in a spaced, side-by-side arrangement with each other. The flight displays 22 and 23 may be laid out in any manner including having fewer or more displays.

A touch screen display or touch sensitive screen 24 may be included in the flight display 23 and may be used by one or more flight crew members, including the pilot and co-pilot, to interact with the systems of the aircraft 10. Such touch sensitive screen 24 may take any suitable form including that of a liquid crystal display (LCD) and may use various physical or electrical attributes to sense inputs from the flight crew.

It is contemplated that one or more cursor control devices 26 and one or more multifunction keyboards 28 may be included in the cockpit 12 and may also be used by one or more flight crew members to interact with the systems of the aircraft 10. A suitable cursor control device 26 may include any device suitable to accept input from a user and to convert that input to a graphical position on any of the multiple flight displays 22. Various joysticks, multi-way rocker switches, mice, trackballs, and the like are suitable for this purpose and each user may have separate cursor control device(s) 26 and keyboard(s) 28.

A turbulence detector 30 may be included within the aircraft 10. The turbulence detector 30 may be placed in any suitable location such as the cabin or storage area of the aircraft and has by way of non-limiting example been illustrated within the cockpit 12. The turbulence detector 30 may be any suitable mechanism for detecting turbulence including by way of non-limiting examples, a vertical accelerometer, a longitudinal accelerometer, a toroidal accelerometer, a vibration indicator, or any combination of the previous examples or equivalents thereof. The turbulence detector 30 may output a signal indicative of turbulence or may output a signal that may be used to determine if turbulence is present.

A light sensor 31 may also be included within the aircraft 10. The light sensor 31 can be placed in any suitable location such as the cockpit 12 in order to determine light conditions of the cockpit 12 or any location the light sensor 31 is located. The light sensor 31 can be any suitable mechanism for detecting light including by way of non-limiting examples, a photoemission detector, a thermal detector, a polarization detector, a photochemical detector, a weak interaction effect detector, or any combination of previous examples or equivalents thereof.

A controller 32 may be operably coupled to components of the aircraft 10 including the flight displays 22 and 23, touch sensitive screen 24, cursor control devices 26, keyboards 28, light sensor 31, and turbulence detector 30. The controller 32 may also be connected with other controllers (not shown) of the aircraft 10. The controller 32 may include memory and processing units, which may be running any suitable programs to implement a graphical user interface (GUI) and operating system. These programs typically include a device driver that allows the user to perform functions on the touch sensitive screen 24 such as selecting and opening files, moving icons, selecting options, and inputting commands and other data through the touch sensitive screen 24. The turbulence detector 30 may provide turbulence information to the controller 32 including that turbulence has been detected. By way of non-limiting example, if the turbulence detector 30 is an accelerometer it may provide an output signal indicative of the acceleration of the aircraft 10 and if the acceleration is greater than a predetermined threshold the controller 32 may determine that the aircraft 10 is experiencing turbulence. The controller 32 may directly compare the output of the turbulence detector 30 to such a predetermined threshold or intermediate functions such as filtering and averaging may be implemented before the comparison is made with the predetermined threshold. For purposes of this description it may be understood that predetermined threshold may be easily selected or numerically modified such that any typical comparison may be substituted (greater than, less than, equal to, not equal to, etc.).

The light sensor 31 may provide light condition information to the controller 32 including low light conditions. Alternatively, the controller 32 may process the data output from the turbulence detector 30 or the light sensor 31 and determine from the output that the aircraft 10 is experiencing turbulence or low light conditions. Turbulence or low light conditions can be conditions indicative of a light requirement event. The controller 32 may also receive inputs from one or more other additional sensors (not shown), which may provide the controller 32 with various information to aid in the operation of the aircraft 10.

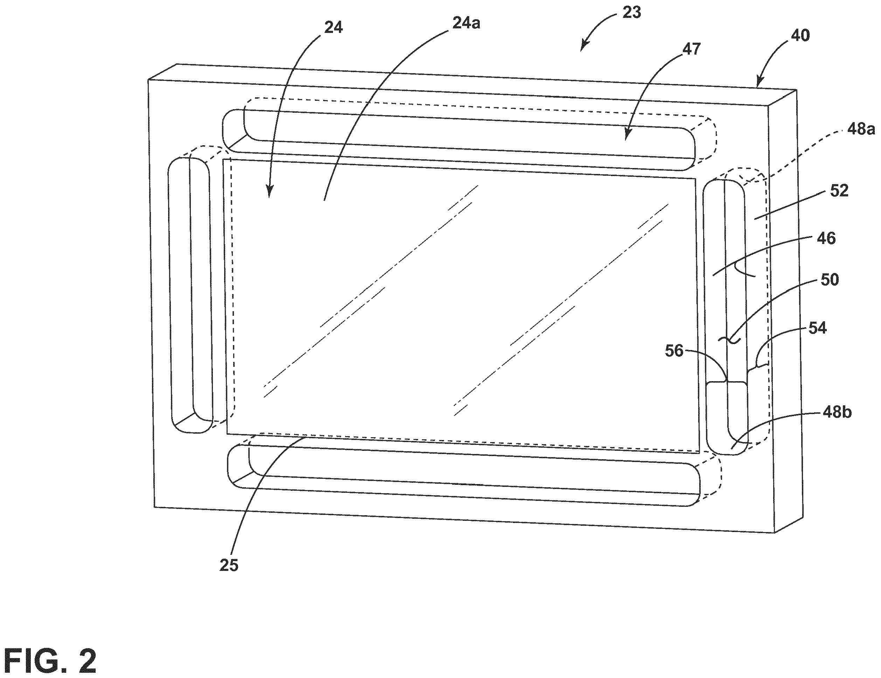

FIG. 2 illustrates a perspective view of the flight display, or touch screen display assembly 23 that can be included in the aircraft 10. The touch screen display assembly 23 includes the touch sensitive screen 24 having a screen surface, or planar surface 24a, and slots 47 located adjacent the planar surface 24a. Adjacent the planar surface 24a can include a distance no more than about a hand's length away, which can be about 4 inches or more. While FIG. 2 shows multiple slots 47 spaced about a periphery 25 of the touch sensitive screen 24, it is contemplated that only a single slot 47 can be included in the touch screen display assembly 23. Such a slot could span more than a single side of the touch sensitive screen 24. By way of non-limiting example, the slots 47 can be located within a bezel 40 adjacent the touch sensitive screen 24. Alternatively, the slots 47 can be formed in the touch sensitive screen 24 itself or in a housing adjacent the touch sensitive screen 24. The housing can be configured similarly to the bezel 40, while not being joined to the touch sensitive screen 24 such that the housing is standalone from the touch sensitive screen 24.

A channel 50 can be formed by spaced sidewalls 46 and a bottom, or rear surface 52 of the slot 47. The rear surface 52 can, but need not be, be parallel to the planar surface 24a of the touch sensitive screen 24. The spaced sidewalls 46 define an opening width 56 and the rear surface 52 defines a depth 54. The opening width 56 can range from 25-50 mm and the depth 54 can range from 30-50 mm. Furthermore, spaced end walls 48a and 48b can define a length of the slot 47.

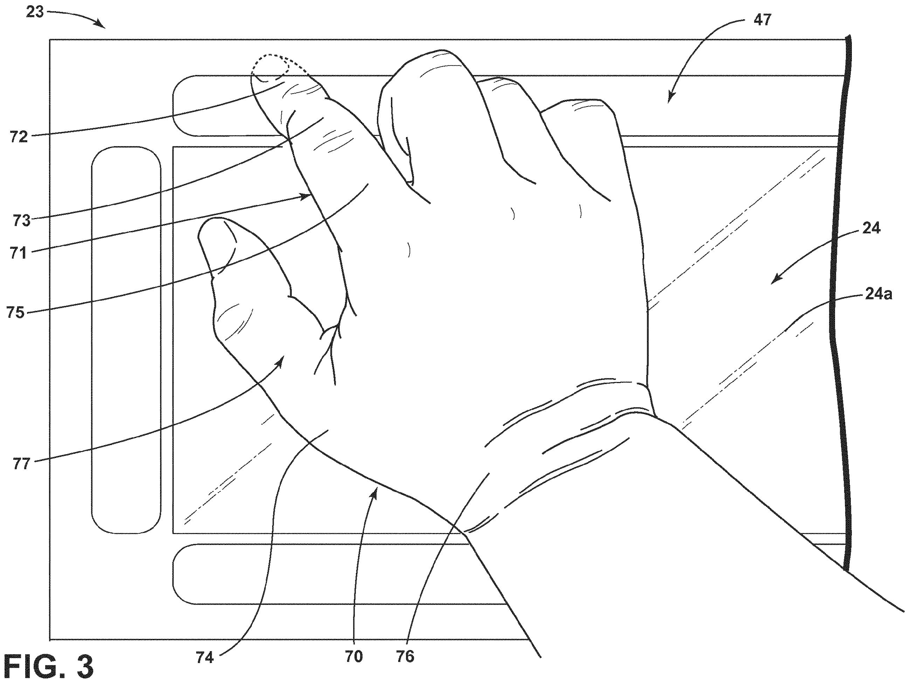

FIG. 3 illustrates a user 70 touching the touch sensitive screen 24 while a finger 71 is inserted within the slot 47. It is illustrated that the user 70 may use a thumb 77 to select, write, tap, or provide other types of input on the touch sensitive screen 24. Alternatively, another finger can be inserted into the slot 47 to provide a grasp while the user 70 utilizes the pointer finger 71 or another finger to enter a touch.

The channel 50 in the slot 47 is sized to accommodate at least a distal phalange 72 of at least one finger 71 in order to form a stabilizing grasping feature when the user 70 interacts with the touch sensitive screen 24. The channel 50 may be sized based on a standard area of a human fingertip. The standard area may be predetermined in any way but it is contemplated that the standard area may be selected based on a subset of human fingertips. Such subsets may be based on geographic origin and average fingertip sizes corresponding thereto, see for example the disclosure in the Handbook of Normal Physical Measurements (Hall, Judith G., Ursula G. Froster-Iskenius, Judith E. Allanson. Handbook of Normal Physical Measurements, Volume 177. Oxford University Press, 1989).

Furthermore, the slot 47 can be configured to accommodate multiple fingers 71 and it is contemplated that the fingers 71 can be accommodated up to the proximal phalange 75. An intermediate phalange 73 is located in between the distal phalange 72 and the proximal phalange 75. While not specifically illustrated in FIG. 3, the intermediate phalange 73 may be accommodated within the slot 47. A profile that fits the distal phalange 72 or the intermediate phalange 73 is configured to create a stabilizing grasping feature that prevents the user 70 from inadvertently touching the touch sensitive screen 24 with other portions of the user's palm or hand 74 or wrist 76 while providing input to the touch sensitive screen 24.

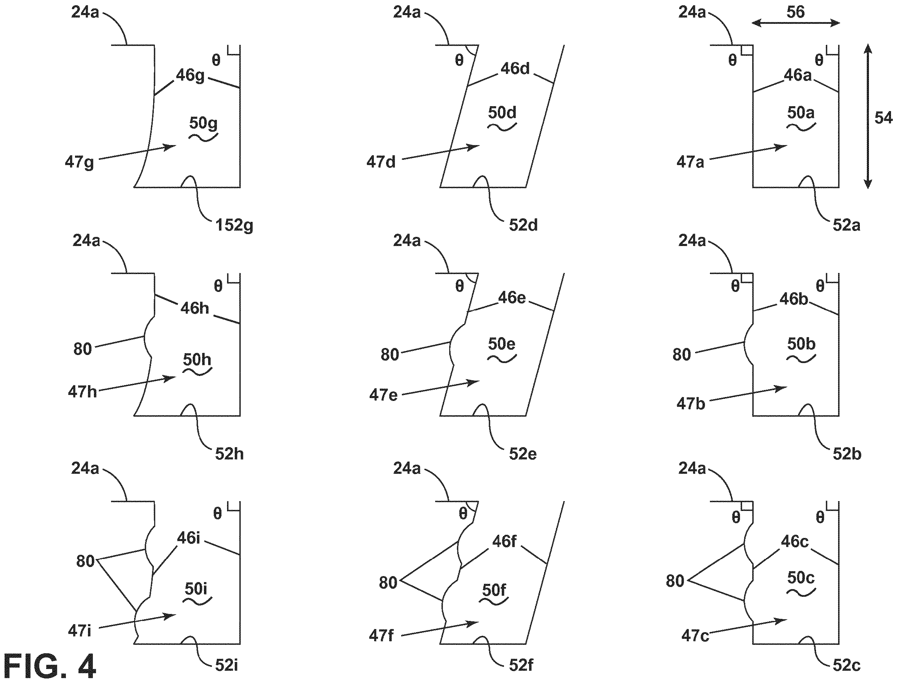

FIG. 4 illustrates a plurality of exemplary slot configurations. Slots 47a-47i and their corresponding channels 50a-50i form the stabilizing grasping feature. Slot 47a includes the spaced sidewall 46a closest to the planar surface 24a of the touch sensitive screen 24 perpendicular to the planar surface 24a of the touch sensitive screen 24 as indicated by the right angle θ. Additionally, the spaced sidewall 46a furthest from the planar surface 24a of the touch sensitive screen 24 is perpendicular to a ray extending from the planar surface 24a of the touch sensitive screen 24 toward the top of the spaced sidewall 46a furthest from the planar surface 24a of the touch sensitive screen 24. The rear surface 52a is parallel to the planar surface 24a of the touch sensitive screen 24 and makes right angles with the sidewalls 46a, forming the channel 50a.

Slot 47b is similar to slot 47a with the difference being that slot 47b includes a fingertip anchor 80 formed in the spaced sidewall 46b closest to the planar surface 24a of the touch sensitive screen 24. The fingertip anchor 80 can be in the form of a depression or groove in the spaced sidewall 46 that can accommodate a fingertip (not shown) within a depth 54 of the channel 50b. The fingertip anchor 80 can also be in the form of a raised portion, or bump, or another textural feature such that a user 70 can locate via touch the fingertip anchor 80.

Slot 47c is similar to slot 47b with the difference being that slot 47c includes two fingertip anchors 80 provided in the sidewall 46c closest to the planar surface 24a of the touch sensitive screen 24. While only up to two fingertip anchors 80 are shown in the slot 47c configuration illustrated in FIG. 4, it is possible for the slots to include more than two fingertip anchors 80.

Slot 47d illustrates a configuration wherein the spaced sidewall 46d adjacent the touch sensitive screen 24 forms an acute angle with the planar surface 24a of the touch sensitive screen 24 as indicated by the acute angle θ and the spaced sidewall 46d furthest from the planar surface 24a of the touch sensitive screen 24 forms an acute angle with a ray extending from the planar surface 24a of the touch sensitive screen 24 toward the top of the spaced sidewall 46d furthest from the planar surface 24a of the touch sensitive screen 24. Slot 47e is similar to slot 47d with the difference being that slot 47e includes a fingertip anchor 80 in the sidewall 46e closest to the planar surface 24a of the touch sensitive screen 24. Slot 47f is similar to slot 47d with the difference being that slot 47f includes two fingertip anchors 80 in the sidewall 46f closest to the planar surface 24a of the touch sensitive screen 24.

Slot 47g is similar to slot 47a, with the difference being that the sidewall 46g closest to the planar surface 24a of the touch sensitive screen 24 diverges from the sidewall 46g furthest from the planar surface 24a of the touch sensitive screen 24. The profile, or curve, of the sidewall 46g closest to the planar surface 24a of the touch sensitive screen 24 can be considered a convex curvature and can be advantageous in that the finger 71 can have more space for grasping the sidewall 46g closest to the planar surface 24a of the touch sensitive screen 24. Slot 47h is similar to slot 47g with the difference being that slot 47h includes one fingertip anchor 80 in the sidewall 46h closest to the planar surface 24a of the touch sensitive screen 24. Slot 47i is similar to slot 47g with the difference being that slot 47i includes two fingertip anchors 80 in the sidewall 46i closest to the planar surface 24a of the touch sensitive screen 24.

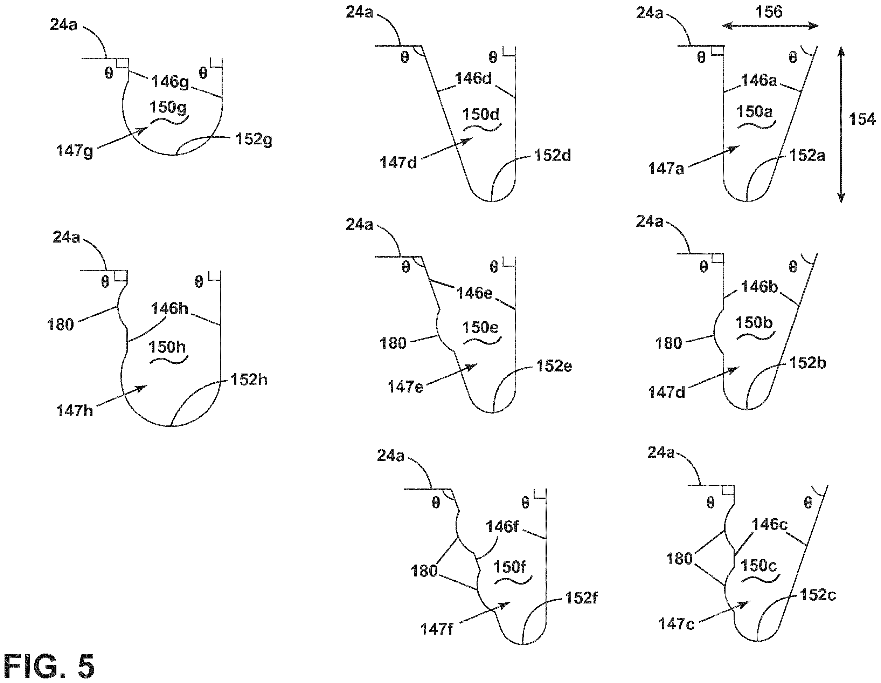

FIG. 5 illustrates additional exemplary slot configurations according to aspects of the disclosure. The slots 147a-147h are similar to those previously described; therefore, like parts will be identified with like numerals increased by 100, with it being understood that the description of the like parts applies to the slots 147a-147h, unless otherwise noted.

One difference in the slot 147a is that the rear surface 152a has a curved profile rather than being parallel to the planar surface 24a of the touch sensitive screen 24. Slot 147a also illustrates that the spaced sidewall 146a closest to the planar surface 24a of the touch sensitive screen 24 is perpendicular to the planar surface 24a of the touch sensitive screen 24, while the spaced sidewall 146a furthest from the planar surface 24a of the touch sensitive screen 24 forms an acute angle with a ray extending from the planar surface 24a of the touch sensitive screen 24 toward the top of the spaced sidewall 146a furthest from the planar surface 24a of the touch sensitive screen 24. The curved rear surface 152a connects the sidewalls 146a and forms the channel 150a.

Slot 147b is similar to slot 147a with the difference being that slot 147b includes a fingertip anchor 180 formed in the spaced sidewall 146b closest to the planar surface 24a of the touch sensitive screen 24. The fingertip anchor 180 can be in the form of a depression or groove in the spaced sidewall 146b. While the channel 150b is configured to accommodate a larger portion of the finger, the fingertip anchor is configured to accommodate a fingertip, to provide another profile to grasp, or to provide a tactile feel at one or more depths of the channel. The fingertip anchor 180 can also be in the form of a raised portion, or bump, or another textural feature such that a user 70 can locate via touch the fingertip anchor 180. Slot 147c is similar to slot 147b with the difference being that slot 147c includes two fingertip anchors 180 provided in the sidewall 146c closest to the planar surface 24a of the touch sensitive screen 24. While only up to two fingertip anchors 180 are shown in the slot 147c configuration illustrated in FIG. 5, it is possible for the slots to include more than two fingertip anchors 180.

Slot 147d illustrates a configuration similar to slot 147a but wherein the sidewall 146d furthest from the planar surface 24a of the touch sensitive screen 24 is perpendicular to a ray extending from the planar surface 24a of the touch sensitive screen 24 toward the top of the spaced sidewall 146d furthest from the planar surface 24a of the touch sensitive screen 24 and the sidewall 146d closest to the planar surface 24a of the touch sensitive screen 24 forms an obtuse angle with the planar surface 24a of the touch sensitive screen 24, as indicated by the obtuse angle θ. This can be thought of as almost a reflection or mirroring of the profile for the slot 147a. Slot 147e is similar to slot 147d with the difference being that slot 147e includes one fingertip anchor 180 in the sidewall 146e closest to the planar surface 24a of the touch sensitive screen 24. Slot 147f is similar to slot 147e with the difference being that slot 147f includes two fingertip anchors 180 provided in the sidewall 146f closest to the planar surface 124a of the touch sensitive screen 24.

Slot 147g illustrates a configuration wherein the sidewall 146g closest to the planar surface 24a of the touch sensitive screen 24 is perpendicular to the planar surface 24a of the touch sensitive screen 24 and the spaced sidewall 146g furthest from the planar surface 24a of the touch sensitive screen 24 is perpendicular to a ray extending from the planar surface 24a of the touch sensitive screen 24 toward the top of the spaced sidewall 146g furthest from the planar surface 24a of the touch sensitive screen 24. The curved rear surface 152g extends outwardly past the sidewall 146g closest to the planar surface 24a of the touch sensitive screen 24 such that the sidewall closest to the planar surface 24a of the touch sensitive screen 24 is inset from the furthest point of the curve of the rear surface 152g and forms an anchor consistent with the curve of the rear surface 152g. The rear surface 152g meets with the sidewall 146g furthest from the planar surface 24a of the touch sensitive screen 24 in a smooth transition such that an angle is not formed.

Slot 147h is similar to slot 147g, however, sidewalls 146h are longer than sidewalls 146g such that slot 147h has more depth 154 than slot 147g. Furthermore, slot 147h includes an additional fingertip anchor 180 in the sidewall 146h closest to the planar surface 24a of the touch sensitive screen 24.

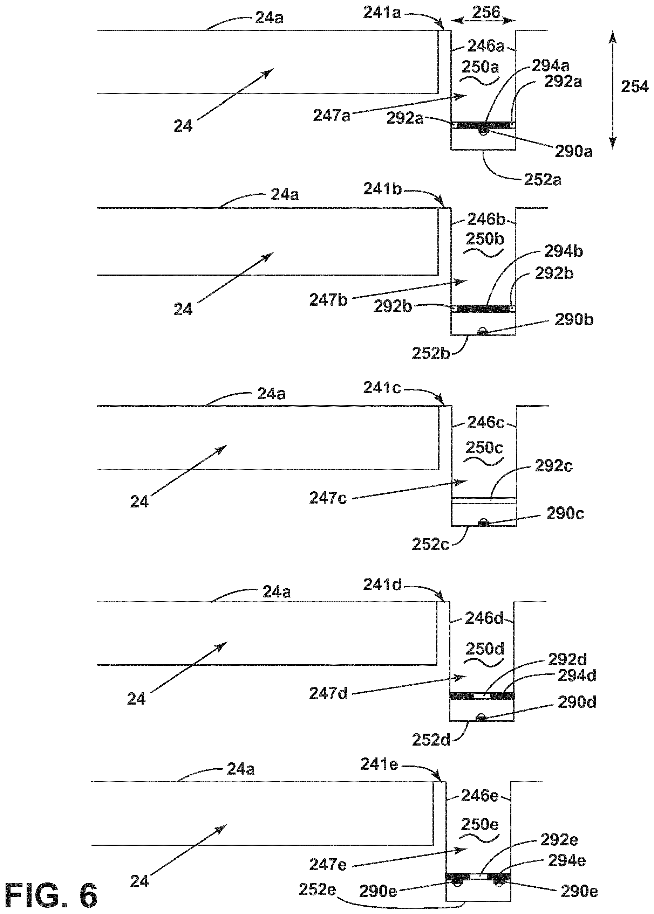

FIG. 6 illustrates alternative slots 247a-e that are similar to the slot 47 or 47a; therefore, like parts will be identified with like numerals increased by 200, with it being understood that the description of the like parts applies to the slots 247, unless otherwise noted.

One difference is that the slot 247a includes a space 241a between the slot 247a and the planar surface 24a of the touch sensitive screen 24 while the slot 47a is adjacent the planar surface 24a of the touch sensitive screen 24 without a space 241 a. The space 241a can be a portion of the bezel 40. It is contemplated that the configuration including slot 47a could be configured to include such a space. Alternatively, the configuration including slot 247a could be configured to not include the space 241a.

Another difference is that the slot 247a includes an illuminable portion. By way of non-limiting example, the illuminable portion is illustrated as a light 290a and an illuminable section 292a. Alternatively, the illuminable portion can include a phosphorescent coating. The light 290a can include, but is not limited to, a LED. The light 290a can be disposed within the slot 247a and behind the illuminable section 292a, which can be a transparent or semi-transparent area of the slot 247a through which light can escape from. Slot 247a illustrates an illuminable portion wherein the illuminable section 292a can be disposed closer to the rear surface 252a than the planar surface 24a of the touch sensitive screen 24. The illuminable section 292a is adjacent each of the sidewalls 246a of the slot 247a and provided on an extension 294a which is in the middle of the illuminable section 292a. The illuminable section 292a and the extension 294a together span the width 256 of the slot 247a where light can emit through the illuminable section 292a and not the extension 294a, which can be opaque such that light does not emit through the middle. Here, the light 290a is provided on the extension 294a such that the light 290a faces the rear surface 252a.

During operation, a light 290a behind the illuminable section 292a can be lit, lighting the illuminable section 292a and at least a portion of the slot 247a. It may be desired to illuminate the light 290a during a determined low light condition or a determined turbulent condition for ease of locating the slot 247a. The controller (FIG. 1) can be operably coupled with the light 290a and configured to illuminate the light during a determined low light condition or a determined turbulent condition, or any other determined condition that may require additional senses to aid in locating the slot 247a.

Another aspect of the disclosure may include a method of operating vehicle having a touch screen display 23. The method can include detecting movement indicative of turbulence, and when turbulence is detected, illuminating via a controller 32, a portion of a slot 47 adjacent the touch screen display 23. The slot 47 can include a channel 50 that is sized to accommodate at least a distal phalange 72 of at least one finger 71 of a user 70 and can be configured to form a stabilizing grasping feature when the user 70 interacts with the touch screen display 23.

The method can further include determining ambient light conditions. Ambient light conditions can be automatically determined by way of a sensor, or can be manually determined by the input of a user 70. Even further, the method can include controlling a level of illumination based on the determined ambient light conditions, which can include turning on the light 290a during low light conditions.

Yet another aspect of the disclosure may include a method of operating vehicle having a touch screen display 23. The method can include detecting, via a controller module, a condition indicative of a light requirement event, and when light requirement event is detected, illuminating a light source via the controller module 32, to emit light onto a portion of a slot 47 adjacent the touch screen display 23. The slot 47 can include a channel 50 that is sized to accommodate at least a distal phalange 72 of at least one finger 71 of a user 70 and can be configured to form a stabilizing grasping feature when the user 70 interacts with the touch screen display 23.

The method can further include sensing ambient light conditions. Ambient light conditions via a sensor and wherein the sensor is configured to output a signal indicative thereof to the controller module. Alternatively, ambient light conditions can be manually determined by the input of a user 70. Even further, the method can include the controller module modifying a level of illumination based on the signal. A light requirement event can include a low light condition. Additionally, the vehicle can include the aircraft 10 having a cockpit 12 with a flight deck 18.

Turning back to FIG. 6, slot 247b is similar to slot 247a, with the difference being that the light 290b is provided on the rear surface 252b and faces the illuminable section 292b and the extension 294b. Slot 247c is similar to slot 247b, however, the illuminable section 292c spans the width 256 of the slot 247c. Slot 247d illustrates an illuminable portion where the illuminable section 292d is provided in the middle of the extension 294d such that the extension 294d is adjacent each of the sidewalls 246d and together, the illuminable section 292d and extension 294d span the width 256 of the slot 247d. The light 290d is disposed on the rear surface 252d and is facing and in alignment with the illuminable section 292d. Thus, light can emit from the middle of the illuminable section 292d and the extension 294d, rather than the sides. Slot 247e is similar to slot 247a with the difference being that there are two lights 290e provided on the extensions 294e and each light 290e is adjacent the sidewalls 246e with the illuminable section 292e provided in between the extensions 294e having the lights 290e.

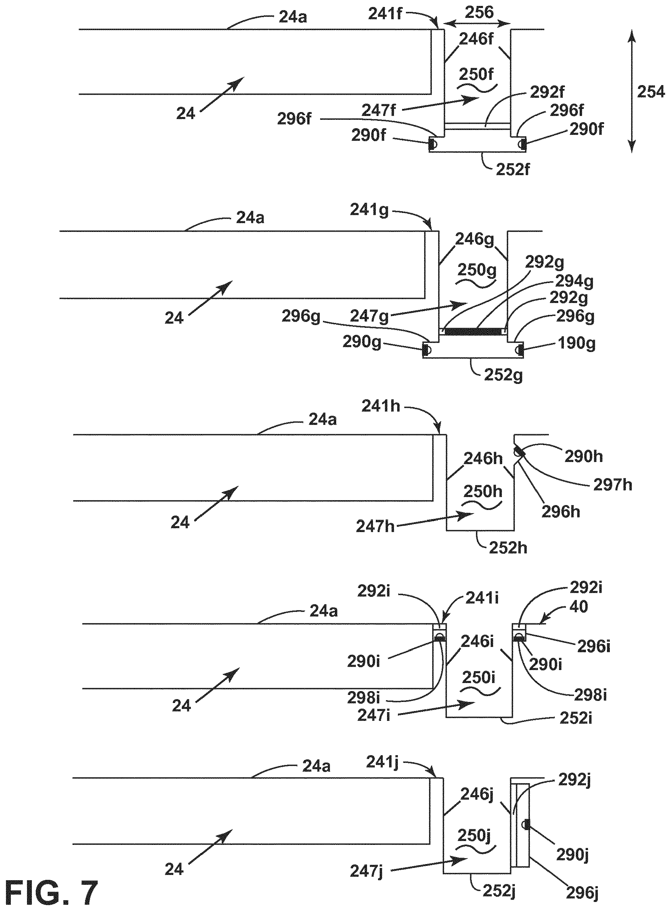

Slot 247f in FIG. 7 is similar to slot 247c except the light 290f is provided within an extension, or bump-out 296f configured to receive the light 290f. The bump-out 296f can be formed in the sidewalls 246f as an extension of the sidewalls 246f forming a space that fits the light 290f. The bump-out 296f can extend outwardly from the sidewalls 246f and can be adjacent the rear surface 252f. While FIG. 7 illustrates two bump-outs 296f and two lights 290f in a facing relationship, it is possible for the slot 247f to only include one bump-out 296f or one light 290f. Slot 247g is similar to slot 247f with the difference being that there are two illuminable sections 292g adjacent the sidewalls 246g having an extension 294g in between, or in the middle of such that light emits only from the channel 250f via the illuminable sections 292g adjacent the sidewalls 246g, rather than emitting from the entire channel 250g width 256, as in channel 250f.

Slot 247h illustrates an illuminable portion where a bump-out 296h is formed in the sidewall 246h furthest from the planar surface 24a of the touch sensitive screen 24 and includes two edges forming an apex 297h. The light 290h can be provided on an edge such that the light is facing the sidewall 246h closest to the planar surface 24a of the touch sensitive screen 24 and can project light downwardly onto the sidewall 246h closest to the planar surface 24a of the touch sensitive screen 24 along with the rear wall 252 h. Depending on the positioning of the bump-out 296h along the sidewall 246h, the light 290h can be provided on either of the edges forming the apex 297h. For example, in the case that the bump-out 296h is positioned closer to the rear surface 252h, the light 290h may be positioned on the edge closer to the rear surface 252h such that the light 290h faces a majority of the sidewall 246h closest to the planar surface 24a of the touch sensitive screen 24 and can project light upwardly onto the sidewall 246h closest to the planar surface 24a of the touch sensitive screen 24.

Turning to slot 247i, illuminable sections 292i are provided adjacent the slot 247i, rather than within the sidewalls 246i of the slot 247i. The illuminable sections 292i can be disposed within the space 241i between the planar surface 24a of the touch sensitive screen 24 and the slot 247i, as well as within the bezel 40 of the touch screen 24. The lights 190e can be provided behind the illuminable sections 292i and disposed on mounts 298i coupled to the sidewalls 246i such that light emitting from the lights 290i can provide an indication of a location of the slot 247i, rather than illuminating the slot 247i itself.

Slot 247j illustrates an illuminable portion where the illuminable section 292j forms, or is coupled to a portion of sidewall 246j furthest from the planar surface 24a of the touch sensitive screen 24. The light 290j can be provided on a mount 296j coupled to the sidewall 246j furthest from the planar surface 24a of the touch sensitive screen 24 such that the light 290j is facing the illuminable section 292j and light can be emitted toward the sidewall 246j closest to the planar surface 24a of the touch sensitive screen 24.

Aspects of the present disclosure allow for a user to secure their hand in vibration environments with a stabilizing grasping feature while allowing the user to accurately interact with a touch screen assembly. This may be especially important during periods of turbulence where a user is more likely to rest portions of their hand on the touch screen or inadvertently touch portions of the touch screen. The sunken, or recessed slots allow for a lower arm position than a configuration employing a raised physical stabilization device, which requires a higher arm position. A higher arm position can lead to an increase in lower arm fatigue. Furthermore, traditional cockpit lighting may not penetrate the slots. Therefore, illumination of the slots can be advantageous to easily locate the slots in low light or vibration conditions with a subtle visual cue such that the user can quickly and correctly identify the slots.

To the extent not already described, the different features and structures of the various embodiments can be used in combination with each other as desired. That one feature cannot be illustrated in all of the embodiments is not meant to be construed that it cannot be, but is done for brevity of description. Thus, the various features of the different embodiments can be mixed and matched as desired to form new embodiments, whether or not the new embodiments are expressly described. Combinations or permutations of features described herein are covered by this disclosure.

Various characteristics, aspects and advantages of the present disclosure may also be embodied in any permutation of aspects of the disclosure, including but not limited to the following technical solutions as defined in the enumerated clauses:
1. A touch screen display assembly, comprising:
   a touch sensitive screen having a screen surface; and
   at least one slot located adjacent the screen surface and wherein the at least one slot includes a channel that is sized to accommodate at least a distal phalange of at least one finger of a user and wherein the slot is configured to form a stabilizing grasping feature when the user interacts with the touch sensitive screen.
2. The touch screen display assembly of clause 1 wherein the at least one slot is located within a bezel adjacent the touch sensitive screen or located within a housing adjacent the touch sensitive screen.
3. The touch screen display assembly of clause 1 or 2 wherein the slot is configured to accommodate multiple fingers or the at least one finger up to a proximal phalange.
4. The touch screen display assembly of any of clauses 1 to 3 wherein the at least one slot includes multiple slots spaced about a periphery of the touch sensitive screen.
5. The touch screen display assembly of any of clauses 1 to 4 wherein the channel is formed by spaced sidewalls defining an opening width and a rear surface defining a depth.
6. The touch screen display assembly of any of clauses 1 to 5 wherein the opening width ranges from 25-40 mm and the depth ranges from 30-50 mm.
7. The touch screen display assembly of any of clauses 1 to 6 wherein the rear surface is parallel to the screen surface.
8. The touch screen display assembly of any of clauses 1 to 7 wherein the rear surface has a curved profile.
9. The touch screen display assembly of any of clauses 1 to 8 wherein at least one of the spaced sidewalls is perpendicular to the screen surface.
10. The touch screen display assembly of any of clauses 1 to 9 wherein the spaced sidewall located closest to the screen surface forms an acute angle with the screen surface.
11. The touch screen display assembly of any of clauses 1 to 10 wherein the at least one slot is further defined by spaced end walls defining a length of the at least one slot.
12. The touch screen display assembly of any of clauses 1 to 11, further comprising at least one fingertip anchor formed in the spaced sidewall located closest to the screen surface.
13. The touch screen display assembly of any of clauses 1 to 12 wherein the slot includes an illuminable portion.
14. The touch screen display assembly of any of clauses 1 to 13 wherein the illuminable portion includes a light disposed within the slot.
15. The touch screen display assembly of any of clauses 1 to 14, further comprising a controller operably coupled to the light and configured to illuminate the light based on at least one of a determined low light condition or a determined turbulent condition.
16. The touch screen display assembly of any of clauses 1 to 15 wherein the slot includes at least one bump-out configured to receive the light.
17. The touch screen display assembly of any of clauses 1 to 16, further comprising at least one light adjacent the slot and configured to provide an indication of a location of the slot.
18. A method of operating a vehicle having a touch screen display, the method comprising:
   detecting movement indicative of turbulence; and
   when turbulence is detected, illuminating, via a controller, a portion of a slot adjacent the touch screen display and wherein the slot includes a channel that is sized to accommodate at least a distal phalange of at least one finger of a user and wherein the slot is configured to form a stabilizing grasping feature when the user interacts with the touch screen display.
19. The method of clause 18, further comprising determining ambient light conditions.
20. The method of clause 18 or 19 wherein the controller controls a level of illumination based on the determined ambient light conditions.
21. A method of operating a vehicle having a touch screen display, the method comprising:
   detecting, via a controller module, a condition indicative of a light requirement event; and
   when a light requirement event is detected, illuminating a light source, via the controller module, to emit light onto a portion of a slot adjacent the touch screen display and wherein the slot includes a channel that is sized to accommodate at least a distal phalange of at least one finger of a user and wherein the slot is configured to form a stabilizing grasping feature when the user interacts with the touch screen display.
22. The method of clause 21, further comprising sensing ambient light conditions via a sensor and wherein the sensor is configured to output a signal indicative thereof to the controller module.
23. The method of clause 21 or 22 wherein the controller module modifies a level of illumination based on the signal.
24. The method of any of clauses 21 to 23 wherein a light requirement event comprises a low light condition.
25. The method of any of clauses 21 to 24 wherein the vehicle includes an aircraft having a cockpit with a flight deck.

Although illustrative embodiments of the present innovation have been shown and described, it would be appreciated by those skilled in the art that changes may be made in these illustrative embodiments without departing from the principles and spirit of the innovation, the scope of which is defined in the claims and their equivalents. This written description uses examples to disclose the innovation, including the best mode, and also to enable any person skilled in the art to practice the innovation, including making and using any devices or systems and performing any incorporated methods. The patentable scope of the innovation is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A touch screen display assembly (23), comprising:
a touch sensitive screen (24) having a screen surface (24a); and
at least one slot (47) located adjacent the screen surface (24a) and wherein the at least one slot (47) includes a channel (50) that is sized to accommodate at least a distal phalange (72) of at least one finger (71) of a user (70) and wherein the at least one slot (47) is configured to form a stabilizing grasping feature when the user (70) interacts with the touch sensitive screen (24).

2. The touch screen display assembly (23) of claim 1 wherein the channel (50) is formed by spaced sidewalls (46) defining an opening width (56) and a rear surface (52) defining a depth (54).

3. The touch screen display assembly (23) of claim 2 wherein the opening width (56) ranges from 25-40 mm and the depth (54) ranges from 30-50 mm.

4. The touch screen display assembly (23) of claim 2 wherein the rear surface (52) is parallel to the screen surface (24a).

5. The touch screen display assembly (23) of claim 2 wherein the rear surface (52) has a curved profile.

6. The touch screen display assembly (23) of claim 2 wherein at least one of the spaced sidewalls (46) is perpendicular to the screen surface (24a).

7. The touch screen display assembly of claim 2 wherein the at least one slot is further defined by spaced end walls defining a length of the at least one slot.

8. The touch screen display assembly (23) of claim 2, further comprising at least one fingertip anchor (80) formed in the spaced sidewall (46) located closest to the screen surface (24a).

9. The touch screen display assembly (23) of any one of claims 1-8 wherein the at least one slot (47) includes an illuminable portion (292a).

10. The touch screen display assembly (23) of claim 9 wherein the illuminable portion (292a) includes a light (290a) disposed within the at least one slot (47).

11. The touch screen display assembly (23) of claim 10, further comprising a controller (32) operably coupled to the light (290a) and configured to illuminate the light (290a) based on at least one of a determined low light condition or a determined turbulent condition.

12. The touch screen display assembly (23) of claim 10 wherein the at least one slot (47) includes at least one bump-out (296a) configured to receive the light (290a).

13. The touch screen display assembly (23) of any one of claims 1-8 wherein the at least one slot (47) is located within a bezel (40) adjacent the screen (24), or located within a housing adjacent the touch sensitive screen.

14. The touch screen display assembly (23) of any one of claims 1-8 wherein the at least one slot (47) is configured to accommodate multiple fingers (71) or the at least one finger (71) up to a proximal phalange (75).

15. The touch screen display assembly (23) of any one of claims 1-8 wherein the at least one slot (47) includes multiple slots (47) spaced about a periphery (25) of the touch sensitive screen (24).
